# EUROPEAN PATENT APPLICATION

(11) **EP 0 966 157 A1**
(43) Date of publication of application: **22.12.1999**
(21) Application number: 98961547.1
(22) Date of filing: 25.12.1998
(51) Int. Cl.: H04N 5/46, G06F 3/00, G06F 13/00

(54) **RECEIVER AND RECEIVING METHOD**

(30) Priority: 25.12.1997 JP 35720997
(71) Applicant: Sony Corporation, Tokyo 141-0001 (JP)
(72) Inventor: HORISAWA, Shozo, Sony Corporation, Tokyo 141-0001 (JP); UCHIDA, Mami, Sony Corporation, Tokyo 141-0001 (JP)
(74) Representative: Pratt, Richard Wilson
(86) International application number: JP9805894
(87) International publication number: WO9934594

(57) **Abstract**

STB 1 has a built-in common processor 5 for performing signal processing common to different kinds of communication media. An input to the common processor 5 can be connected to an output terminal of a front-end portion 3 removably held in a hold space. The front-end portion 3 performs signal processing exclusive to each communication medium. A data stream is output from the front-end portion 3 to the common processor 5 and processed there in a predetermined manner, and an A/V signal output. By preparing one or more front-end portions 3 exclusive to respective communication media, and selectively setting appropriate one in the hold space of STB 1, a desired communication medium can be received.

## Description

### Technical Field

This invention relates to a receiver and a receiving method configured to receive signals of a plurality kinds of communication media with a single cabinet.

### Background Art

As communication media intended for television receiver sets, satellite broadcastings supplied through satellites and cable television broadcastings (CATV) received via cables directly connecting centers and subscribers, among others, are being distributed in addition to conventional television broadcastings by ground waves. Moreover, television receivers having the function of connecting to the Internet have also appeared, and in this case, images and data obtained through the Internet are displayed on the television receivers.

For example, conventional ground-wave television broadcastings use employ analog systems and transmit signals in relatively low frequency bands. Digital satellite broadcastings and digital CATV employ digital systems and transmit signals in relatively high frequency bands. As these examples demonstrate, respective communication systems are different in frequency band of the transmitted signals and in mode of signal modulation. Additionally, in some of digital satellite broadcastings and digital CATV, signals are scrambled by predetermined methods. To visually reproduce images from these communication media on television receivers, the signals must be descrambled by predetermined methods.

On the other hand, video information on the Internet is transmitted in form of files instead of video signals. Therefore, to connect television receivers to the Internet and display thereon images transmitted onto the net, they need means for displaying a file as video signals.

As reviewed above, since individual communication media are different in form of signals used for communication, receivers need different structures corresponding to individual communication media.

Heretofore, as well, constructions for enabling a single television receiver to cope with these different communication systems have been brought into practice. For example, one has been configured to connect a receiver called set top box (STB) between a television receiver and an antenna and convert a received signal into a form the television receiver employs. Some of STB have a descrambling function as mentioned above.

Heretofore, however, each STB has been intended for particular one of communication systems, and a corresponding number of STBs were required to cope with different communication systems. The need for preparation of a plurality of STBs results in requiring an excessive cost and space, and invites complicated connection between respective STBs and the display device.

It is therefore an object of the invention to provide a receiver adaptive to a plurality of communication systems with a signal cabinet.

### Disclosure of the Invention

To attain the object, the invention provides a receiver for receiving a signal of at least one of a plurality kinds of communication media, comprising:
a hold space for removably holding a first signal processor for performing signal processing exclusive to a predetermined communication medium; and
a second signal processor supplied with an output of the first signal processor held in the hold space to perform a part of signal processing common to different kinds of communication media.

According to the invention, there is further provided a receiving method for receiving a signal of at least one of a plurality kinds of communication media, characterized in:
a first signal processor for performing signal processing exclusive to a predetermined communication medium being configured to be removably held in a hold space in a receiver main body;
a second signal processor for performing a part of signal processing common to different kinds of communication media being built in the receiver main body so as to be connected to the first signal processor held in the hold space; and
a desired communication medium being received by setting the first signal processor corresponding to the desired communication medium in the hold space.

According to the invention, the first signal processor for processing signals exclusive to a single communication medium is prepared to be removably mounted in the hold space whilst the second signal processor for processing signals common to a plurality kinds of communication media is built in the receiver. Therefore, by selecting appropriate one as the first signal processor, signals of any desired communication media among a plurality kinds of communication media can be received by a single receiver.

### Brief Description of Drawings

Fig. 1 is a conceptual diagram showing a receiver according to the invention.
Figs. 2A and 2B are schematic diagrams roughly sketching examples of outer appearance of a front-end portion.
Figs. 3A and 3B are schematic diagrams showing different embodiments of the receiver according to the invention.
Fig.4 is a fragmentary, perspective view showing an exemplary mode of connection in the receiver according to the invention.
Figs. 5A through 5C are diagrams showing different modes of connection in the receiver according to the invention.
Figs. 6A and 6B are diagrams showing further modes of connection in the receiver according to the invention.
Fig. 7 is a block diagram showing an exemplary construction of STB including the front-end portion.

### Best Modes for Carrying Out the Invention

Explained below is an embodiment of the invention. A receiver according to the invention divides its signal processing into a part permitting common transaction for all of a plurality of communication media and a part variable among these communication media. Then, by permitting the portion variable among different communication media to be exchanged, the receiver becomes adaptive to different kinds of communication media with a single cavity.

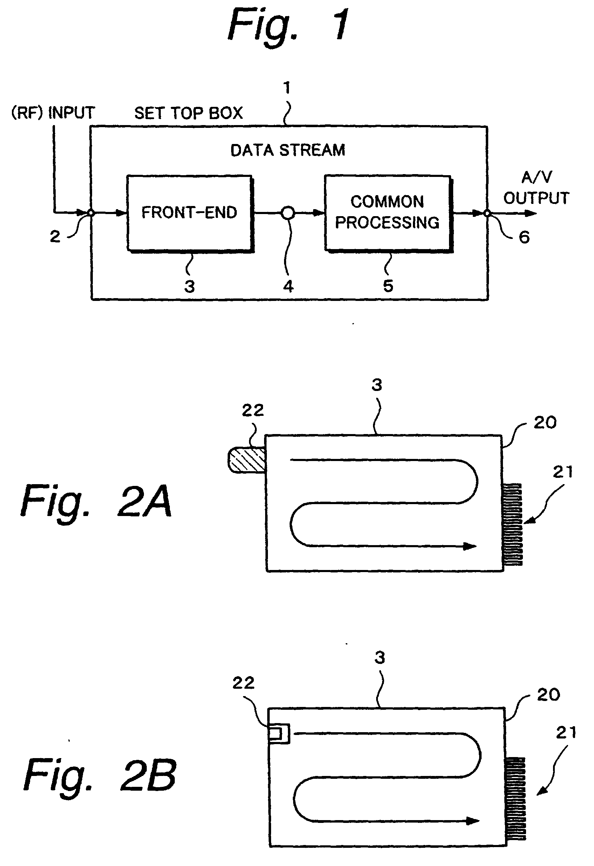

Fig. 1 shows a concept of construction of the receiver according to the invention. The receiver is in form of a set top box (STB) 1, and an input signal is supplied to STB 1. The input signal is an RF signal when the communication medium is a satellite broadcasting, television broadcasting using a ground wave, or CATV. In case that the communication medium is CATV connected by optical cables, the input signal is an optical modulation signal. If the communication medium is the Internet, the input signal is an analog-modulated digital signal transmitted through a public telephone line, for example.

The input signal is supplied to a front-end portion 3 via an input terminal 2. the input signal is processed in a predetermined manner at the front-end portion 3, then converted to a signal form that can be processed in a common processor 5, and output therefrom. The output from the front-end portion 3 is reformed into a data stream, such as MPEG2 (moving picture experts group phase 2) transport stream, and supplied to the common processor 5.

In the embodiment shown here, the front-end portion 3 is configured to be removably set in a hold space in STB 1, at least with an output terminal 4 as a connector. An input terminal 2 of the front-end portion 3 can be connected to an input terminal of STB 1. Alternatively, it is exposed outside a cabinet of STB 1 so that a supply line of input signal is directly connected thereto. The front-end portion 3 is exclusive prepared for each one of communication media different in signal form. Therefore, by selecting appropriate one of front-end portions 3 for a particular communication medium to be received, a single STB 1 can copes with different kinds of communication media.

The common processor 5 processes a supplied signal, and outputs it as an A/V (audio/video) signal. Since the front-end portion 3 already finishes its own signal processing, the common processor 5 can be used for all of signals from different kinds of communication media using different signal forms. Output of the common processor 5 is connected to an exterior device, such as display device or VTR (video tape recorder, via a terminal 6.

Figs. 2A and 2B roughly illustrate outer appearances of the front-end portion 3. Fig. 2A shows an example of the front-end portion 3 adaptive to satellite broadcasting, CATV, digital television broadcastings, and so forth. The front-end portion 3 has the form of a cartridge, for example, which has a connector 21 including a plurality of pins extending from its end surface 20 as the terminal 4. From the surface opposite from the end surface 20, a connector 22 such as F-type connector or IEC connector, for example, extends to behave as the terminal 2. In the example of the front-end portion 3 shown in Fig. 2B, which is configured to allow connection to a telephone, a connector 22 is prepared as a modular jack. A connector for RS-232C may be provided as well. Not limited to the illustrated example, the connector 21 and the connector 22 may be provided on the same end surface 20.

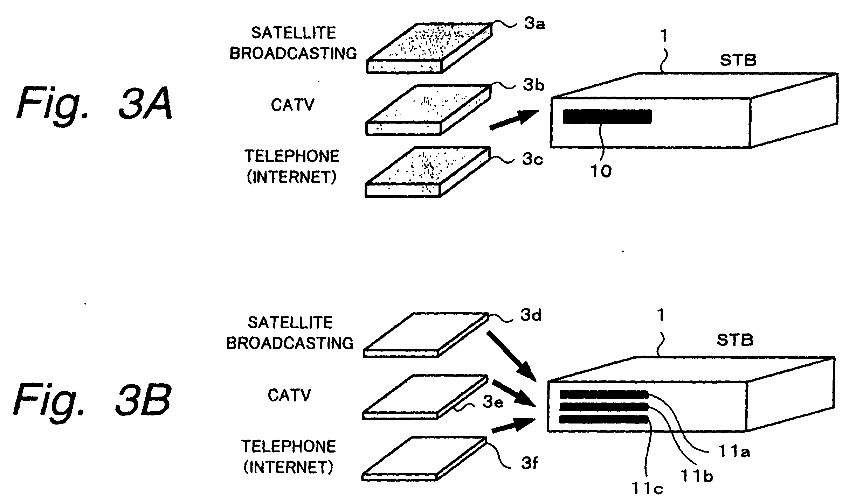

Figs. 3A and 3B show different types of the receiver according to the embodiment. STB 1 has a slot for inserting the front-end 3. Fig. 3A illustrates an example having a single slot 10 for STB 1. On the other hand, Fig. 3B illustrates an example having a plurality of (three, for example) slots 11a, 11b and 11c for STB 1.

Preferably, the slot 10, or the slots 11a, 11b and 11c, each has formed therein a guide like a groove, for example, for guiding insertion of the front-end portion 3. And an eject mechanism is preferably provided to help removal of the inserted front-end portion 3.

In each slot 10, 11a, 11b and 11b, an STB-side connector is provided for connection to the connector 21 of the front-end portion 3. And the connector 22 appears outside. A connector fitting with the connector 22 may be provided on the part of STB 1 as well.

A plurality of front-end portions 3 each exclusive for each of communication media are prepared, such as front-end portion 3a for satellite broadcastings, front-end portion 3b for CATV, and front-end portion 3c for telephone, i.e., the Internet. In the example shown in Fig. 3A, any one of the front-end portions 3a, 3b and 3c is selectively inserted into the slot 10, defending on the communication medium to be received.

Also in the example of Fig. 3B having some (three, for example) slots 11a, 11b and 11c for STB 1, a plurality of front-end portions 3 each exclusive for each of different communication media are prepared, such as front-end portion 3d for satellite broad castings, front-end portion 3e for CATV, and front-end portion 3f for telephones, i.e., the Internet. In the example of Fig. 3B, the front-end portion 3 need not be exchanged every time when the communication medium to be received is changed from one to another. In the example of Fig. 3B, the user need not have all of the front-end portions 3d, 3e and 3f. Having only one of them, the user can receive a communication medium corresponding to the front-end portion he or she actually has. Then, by adding one or more front-end portions as desired, the user can increase the function of STB 1.

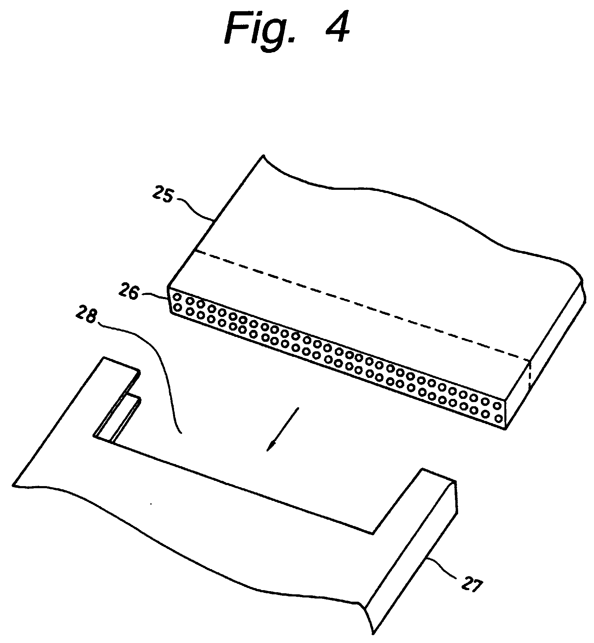

In the example shown in Fig. 3B, the front-end portions 3d, 3e and 3f for different communication media may be either fixedly related to the slots 11a, 11b and 11c or flexibly related to them. The form of the front-end portion 3 is not limited to a cartridge type. For example, the front-end portion 3 may has the form of a card. In this case, as shown in Fig. 4, it is typically used as a peripheral device of a note-type (portable) personal computer, for example. A PC card may be made to function as the front-end portion 3. A PC card is an IC card as large as a credit card according to the PCMCIA (Personal Computer Memory Card International Association)/JEIDA (Japan electronic Industry Development Association) standards.

In Fig. 4, numeral 25 denotes a PC card as the front-end portion 3. On a surface of the main body of the PC card 25 to be inserted into a slot, a card-side socket 26 for connection to the common processor 5 is provided. In the deepest end of the slot of STB 1, a main body connector 27 having an opening 28 for receiving the PC card 25 is provided. The main body connector 27 is connected to the input portion of the common processor 5. When the PC card is inserted into the slot of STB 1, projecting pins of the connector 27 engage a predetermined number of holes of the socket 26. As a result, the PC card (front-end portion 3) is connected to STB 1 (common processor 5). As to the connector 22 for the input terminal 2, part of the terminal of the card-side socket 26 may be used, or another terminal may be provided on a surface of the PC card 25 other than the surface having formed the socket 26.

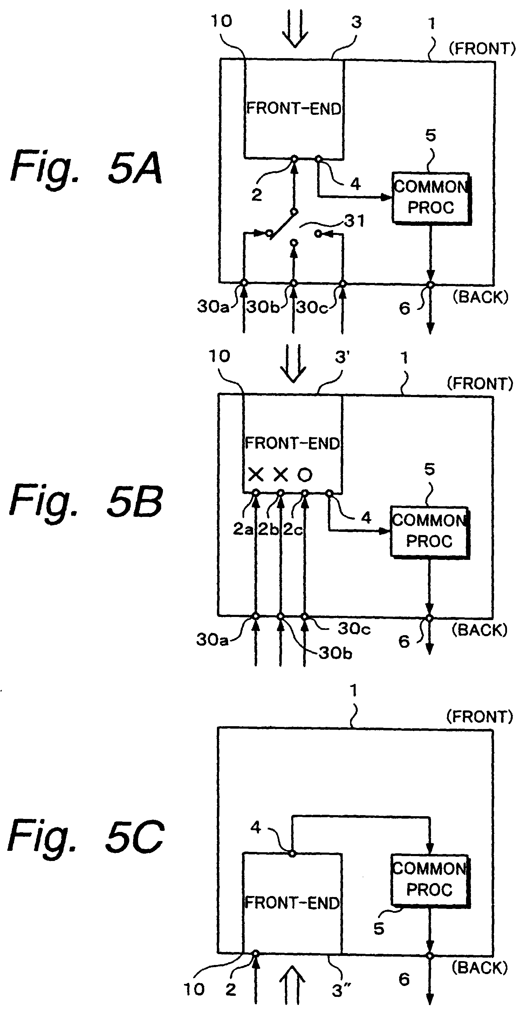

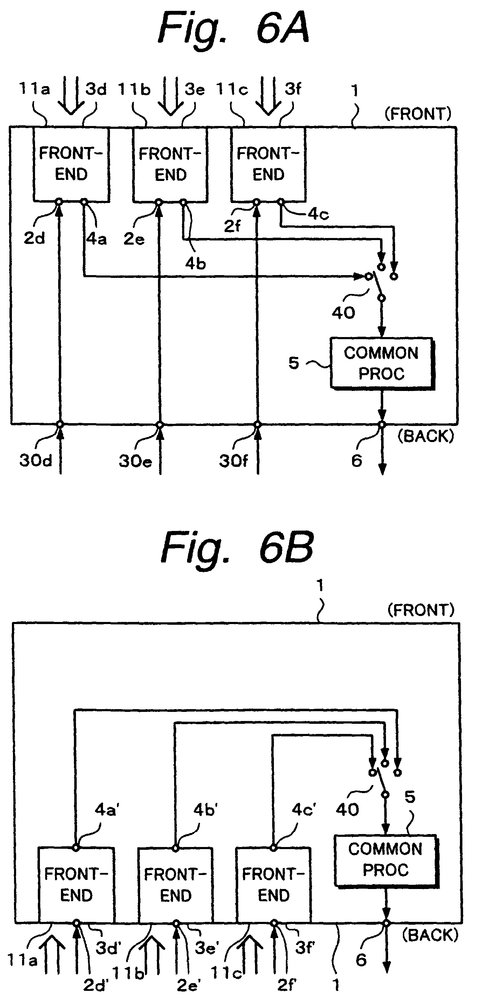

Figs. 5A through 5C, 6A and 6B schematically show internal structures of STB 1 viewed from its top surface. Figs. 5A through 5C show examples in which a single slot 10 is provided in STB 1. Figs. 6A and 6B show examples in which a plurality of slots 11a, 11, 11c are provided in STB 1. Although Figs. 6A and 6B illustrate the slots 11a, 11b and 11c as being aligned horizontally. However, not limited to these examples, they may be stacked vertically or oriented vertically.

In Fig. 5A, the slot is provided in the front face of STB 1. Signal input terminals 30a, 30b and 30c are provided for different communication media. Signals supplied to the signal input terminals 30a, 30b and 30c are switched and selected by the switch circuit 31 in response to the front-end portion 3 actually inserted. The selected signal is supplied to the front-end portion 3 via the terminal 2 (connector 22), and after a predetermined signal processing, it is output from the terminal 4 (connector 21). Out from the connector 21 is supplied to the common processor 5, processed to an A/V signal, for example, and released from the terminal 6.

Switching by the switch circuit 31 may be so designed that an ID (identifying) signal for a corresponding communication medium be released from the front-end portion 3, and this ID signal automatically controls the switch circuit 31. Alternatively, by providing a projection or a notch at a predetermined position of the front-end portion 3, and mechanically detecting the projection or notch in the slot 10, the switch circuit 31 may switch signal in response to the result of the detection. Needless to say, it is also possible to manually change the switch circuit 31.

Fig. 5B shows an example in which selection of signals of different communication media supplied through the signal input terminals 30a, 30b and 30c is performed by the front-end portion 3'. In this example, the front-end 3' has input terminals 2a, 2b and 2c for different communication media. However, any inputs the front-end portion 3' does not cope with may be excluded by not connecting corresponding pins to the interior circuit by means of the connector 21, for example, so that only the communication media corresponding to the front-end portion 3' can be selected.

Fig. 5C shows an example having the slot 10 on the back surface of STB 1. In its front-end portion 3'', the connector 21 and the connector 22 are located at opposite sides. Orienting the connector 21 toward the deepest end of the slot 10, the front-end portion 3'' is inserted. Then, the a connection line of a communication medium corresponding to the front-end portion 3'' is directly connected to the connector 22 exposed from the back surface.

In Fig. 6A, slots 11a, 11b and 11c for different communication media are provided on the front surface of STB 1. On the back surface thereof, signal input terminals 30d, 30e and 30f corresponding to these communication media are provided. These signal input terminals 30d, 30e and 30f correspond to the slots 11a, 11b and 11c, respectively. Inserted into the slots 11a, 11b and 11c are corresponding front-end portions 3d, 3d and 3f, respectively. However, only one or two of these three front-end portions may be used in certain cases.

Signals supplied from the signal input terminals 30d, 303 and 30f are delivered to the front-end portions 3d, 3d and 3f, respectively. These signals are processed in a predetermined manner in the front-end portions 3d, 3e and 3f, respectively, then output from the terminals 4a, 4b and 4c to the switch circuit 40. A signal selected by the switch circuit 40 is supplied to the common processor 5, reformed into an A/V signal, and output from the terminal 6.

Selection by the switch circuit 40 is manually performed by the user, using a changeover switch (not shown) provided on the front face of STB 1, for example. STB 1 is connected to a television receiver, for example, connected to the output terminal 6 by a predetermined method so that control signal be exchanged between them. Thus, by changing the mode of the television receiver, i.e., changing the channel, a corresponding communication media can be selected in STB 1. In this manner, by configuring STB 1 to receive a predetermined control signal from the television receiver, it is possible to design the switch circuit 40 to link with an AV selector for changing a plurality of input sources.

In Fig. 6B, the slots 11a, 11b and 11c are provided on the back side. Similarly to the example shown in Fig. 5C, the connecter 21 and the connector 22 are positioned at opposite sides in each of the front-end portions 3d', 3e' and 3f'. To the connector 22 exposed to the back side of each front-end portion 3d', 3e' or 3f', a connection line of a communication medium corresponding to the front-end portion 3d', 3e' or 3f' is connected directly.

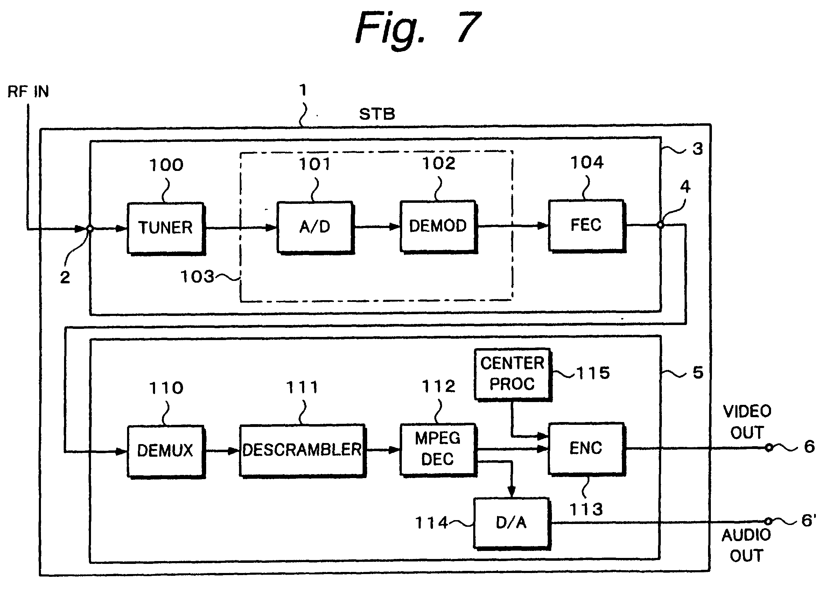

Fig. 7 schematically shows an arrangement of STB 1 containing the front-end portion 3. Explanation is made here as the front-end portion 3 being for CATV. In CATV, images and voices are compressed and encoded by MPEG2, then digitally modulated by QAM (quadrature amplitude modulation), and transmitted as a RF signal. Connected to the terminal 2 is a transmission line of CATV, and an input RF signal is frequency-converted into an IF signal with an intermediate frequency by a tuner 100.

The IF signal is supplied to a digital demodulator 103 made up of an A/D converter circuit 101 and a demodulator circuit 102. In this example using the front-end portion 3 for CATV, the digital demodulator 103 demodulates a QAM modulation signal. The signal demodulated into digital data by the digital demodulator 103 is supplied to a FEC (forward error correction) circuit 104, and an error correction code added on the modulation side is decoded there. The decoded and error-corrected data is supplied to the common processor via the terminal 4.

The front-end portion 3 has a construction corresponding to a communication medium for the front-end portion 3 to deal with. For example, the digital demodulator 103 may takes various forms not only of QAM mentioned above but also of 8-value VSB (vestigial sideband) modulation system, OFDM (orthogonal frequency division multiplex) modulation system, 8-phase PSK (phase shift keying) system, QPSK (quadrature phase shift keying) system, depending on the communication media. Similarly, the tuner 100 and FEC circuit 104 may take various arrangements. As a result, the front-end portion 3 can be made adaptive to various systems of communication media.

Data output from the front-end portion 3 may be a typical data stream, such as MPEG2 transport stream.

Therefore, usable as the later-stage circuit is one common to the front-end portion 3. That is, even when the front-end portion 3 is replaced or switched, the later-stage circuit (common processor 5) need not be changed.

Data output from the front-end portion 3 is supplied to the common processor 5. The signal supplied to the common processor 5 is separated into packets by a demultiplexer (DEMUX) 110, and the packets are divided to groups different in type of data, namely, group of video data and group of audio data, for example. If the signal is received in an encoded form, then the code is decoded by the decoder circuit 111, and its decoding is released. For example, if the signal is received in a scrambled form, the decoder circuit 111 descrambles the signal. The data is then supplied to an MPEG decoder 112. The MPEG decoder 112 includes an MPEG video decoder and an MPEG audio decoder, and the MPEG video data and MPEG audio data separated by DEMUX 110 are decoded individually.

The digital audio data decoded by the MPEG decoder 112 is converted into an analog audio signal by a D/A converter circuit 114, and output from the terminal 6'. The digital video data decoded by the decoder 112 is supplied to a video encoder 113. The video encoder 113 converts the input digital video data into a composite analog video signal of the NTSC 525 lines/59.95 Hz system, for example. Output from the video encoder 113 is released from the terminal 6.

The mode of output of the video signal may be other than the NTSC system, namely, video signal of the PAL system or SECAM system, or alternatively, analog or digital component signal (Y, R-Y, B-Y signal, or RGB signal), as well.

The video encoder 113 is not limited to the example shown here, and may be configured to be adaptive to the 1125 lines/60 Hz high vision system. Additionally, it may be designed to treat the PAL system and the SECAM system distributed mainly in western Europe. Furthermore, the video encoder 113 may have functions of these different system in combination to use any desired one by switching them.

The common processor 5 more preferably includes a central processor 115 including CPU, RAM, ROM, and so forth, for example, in addition to the above explained construction. Then, it will be able to perform various kinds of processing more flexibly. For example, the central processor 115 may control respective portions of the common processor 5 according to a predetermined program stored in ROM. Further by using a front-end portion 3 having the function of a modem, output of the front-end portion 3 may be supplied directly to the central processor 115 for predetermined processing therein. If its output is supplied to the video encoder 113, then the receiver is available for connection to the Internet through a public telephone line, for example.

The foregoing description has been made as applying the invention to receivers for mainly receiving video signals. However, the invention is not limited to it, but also applicable to receivers for receiving audio signals and data signals of different systems. Moreover, the receiver can be designed to treat a plurality of communication media for transmitting different kinds of signals different in data system, such as images, voices and data. Furthermore, the device as the destination of signals from the receiver is not limited to a display device, but may be a personal computer, for example.

As described above, according to the invention, the receiver has a construction separated into the front-end portion for a part exclusive to each communication medium and the common processor for a part common to all communication media. Therefore, by changing the front-end portion depending on a desired communication medium, a single receiver is made adaptive to a plurality of communication media.
1 SET TOP BOX
3 FRONT-END PORTION
5 COMMON PROCESSOR
103 DIGITAL DEMODULATOR
110 DEMULTIPLEXER
112 MPEG DECODER
113 VIDEO ENCODER
115 CENTRAL PROCESSOR

## Claims

1. A receiver for receiving a signal of at least one of a plurality kinds of communication media, comprising:
a hold space for removably holding a first signal processor for performing signal processing exclusive to a predetermined communication medium; and
a second signal processor supplied with an output of said first signal processor held in said hold space to perform a part of signal processing common to different kinds of communication media.

2. The receiver according to claim 1 wherein a single said hold space is provided, and appropriate one of said first signal processor is selectively set therein, depending upon said communication medium to be received.

3. The receiver according to claim 2 further comprising input electing means for selectively supplying one of input signals corresponding to said first signal processor currently set in said hold space.

4. The receiver according to claim 1 wherein a plurality of said hold spaces are provided, and said first signal processor is set in selected one of said plurality of said hold spaces.

5. The receiver according to claim 4 further comprising output selecting means interposed between said hold portions and said second signal processor to select an output signal of said first signal processor.

6. The receiver according to claim 1 wherein said first signal processor includes an input terminal supplied with an input signal, and an output terminal for outputting a signal to said second signal processor.

7. The receiver according to claim 1 wherein said first signal processor includes at least a demodulator for demodulating the input signal.

8. The receiver according to claim 1 wherein said first signal processor outputs a data stream.

9. The receiver according to claim 1 wherein said first signal processor has the form of a card, and an input terminal and an output terminal thereof are exposed outside.

10. The receiver according to claim 1 wherein said first signal processor has the form of a cartridge, and an input terminal and an output terminal thereof are exposed outside.

11. A receiving method for receiving a signal of at least one of a plurality kinds of communication media, characterized in:
a first signal processor for performing signal processing exclusive to a predetermined communication medium being configured to be removably held in a hold space in a receiver main body;
a second signal processor for performing a part of signal processing common to different kinds of communication media being built in said receiver main body so as to be connected to said first signal processor held in said hold space; and
a desired communication medium being received by setting said first signal processor corresponding to said desired communication medium in said hold space.
